Europäisches Patentamt

European Patent Office

Office européen des brevets

(19)

(11) **EP 1 467 292 A1**

(12) **EUROPEAN PATENT APPLICATION**

(43) Date of publication:
**13.10.2004 Bulletin 2004/42**

(51) Int Cl.7: **G06F 17/30**

(21) Application number: **04290940.8**

(22) Date of filing: **08.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **11.04.2003 FR 0304595**

(71) Applicant: **Canon Research Centre France 35510 Cesson-Sevigne (FR)**

(72) Inventor: **Le Floch, Hervé 35000 Rennes (FR)**

(74) Representative: **Nicolle, Olivier Santarelli 14, avenue de la Grande Armée, BP 237 75822 Paris Cédex 17 (FR)**

(54) **Method and device for calculating a digital image descriptor and application to indexing**

(57)     The invention concerns a method and device for calculating a descriptor of a digital image (I), represented by a set of coefficients. The method comprises the steps of:

- performing a hierarchical division (E2) into blocks of the digital image, the hierarchical division being limited to a predetermined number of levels of depth, the number of blocks per level of depth being dependent on said level of depth;
- for each level of depth, calculating (E4) at least one characteristic value from the coefficients representing each block;
- forming (E9) a descriptor of said digital image (I) from the characteristic values of each block at each level of depth,

    wherein the hierarchical division (E2) is limited to a maximum of three levels of depth, whatever the size of the initial image.

    The descriptor obtained by the descriptor calculation method is particularly used in a method of calculating a similarity distance between two images.

Figure 3

**Description**

The present invention concerns a method and device for calculating a digital image descriptor.

It also concerns a method and device for calculating a distance between two images in a digital image database using the descriptor calculation method in accordance with the invention.

In general terms the field of the invention is digital image indexing. The exponential proliferation of digital data, in particular images and videos, has given rise to the formation of very large image databases, which has created the need to develop efficient automatic techniques for managing them. For example, if there is a large-sized digital image database, and it is wished to find a set of images similar to a source image in this database, it is essential to have efficient techniques for finding a set of images by matching. Pixel-by-pixel comparison of images is not conceivable, on the one hand because of its computational complexity, and on the other hand because the image it is wished to find in the database may have undergone certain transformations (compression, change of scale) which have not altered its visual content, but have altered its content in terms of digital signal. It has therefore been necessary to develop descriptors of the content of a digital image which are compact and representative. A search can then be made for the similarity between two images by calculating the distance between the descriptors of these images. If these descriptors are sufficiently compact, the calculation of all the distances between a source image and all the images in a database can be relatively quick. Many methods of calculating digital image descriptors from the content are known in the prior art.

More particularly, the field of the invention is the context of digital photograph database indexing. Nowadays, digital images of very high resolution, e.g. 4064 x 2704, that is 11.1 megapixels, can be obtained, in particular with professional photographic apparatus. These images are stored by the creators or the distributors (e.g. agencies, Internet access providers), but are in general distributed on the Internet at a lower resolution, called a thumbnail. In this case, therefore, the digital image undergoes a change of scale by a very large factor, which may be as much as 16, and may possibly undergo other modifications such as a change of orientation for display (for example rotation through a right angle or a reflection in a vertical axis). In this case, the problem arises of subsequently finding an image in a database from a thumbnail. The invention lies more particularly in this context of a search for descriptors which are compact and robust to geometric distortions, such as for example a large change of scale, a rotation or a mirroring. Moreover, in the context of large-sized databases of high-resolution digital photographs, it is also essential to have descriptors which are quick to calculate.

In the prior art, many procedures are known for calculating image descriptors from the content. In particular the MPEG-7 standards committee has developed recommendations for describing multimedia documents by their content. One of the most efficient MPEG-7 descriptors from the computational point of view for digital images is the color descriptor, "color layout", described in the document ISO/IEC JTC1/SC29/WG11 N4632, "MPEG-7 Visual part of experimental Model Version 11.0". For calculating this descriptor, an original image is first divided into 8 x 8 blocks, and an average value is calculated for each block. The average values calculated are grouped together in a block of size 8 x 8, to which a Discrete Cosine Transform (DCT) is applied, and the descriptor is formed from a number N, less than or equal to 64, of selected significant coefficients. This descriptor is however not robust to the large changes of scale by digital subsampling since, for such a transformation, the averages per block will be far removed from the initial average values and will lead to false matches.

Another solution for image database indexing based on 8x8 blocks is described in the article *"Image database indexing using JPEG coefficients",* by S. Climer and S.K. Bhatia, in the Journal of the Pattern Recognition Society (Elsevier Science). This document proposes to represent each image by a quad-tree structure obtained by recursively subdividing each set of the image into four subsets, until the considered subsets are 8x8 blocks, which therefore correspond to the leaves of the quad-tree structure. As this solution uses information from 8x8 blocks whatever the size of the image and consequently involves a generally large and varying number of levels of depth, it is not robust to large changes of scale.

On the other hand, a digital image description procedure is known which is robust to large changes of scale, described in the article *"Indexing based on* scale *invariant interest points",* by K. Mikolajczyk and C. Schmid, published in "International Conference on Computer Vision", pp 525-531, in July 2001. In this article the authors propose to use, for describing a digital image, a set of interest points detected on a multi-scale representation of the image obtained by Gaussian filterings. A vector of characteristics of the signal is associated with each interest point. This procedure makes it possible to achieve a robustness to scaling factors which may be as high as 4, but only if the change of scale is obtained in an analog manner, for example by change of focal length of the digital photographic apparatus. The descriptor is not however robust to changes of scale by digital subsampling, and in particular if the scaling factor is greater than 4. Moreover, it may be noted that the descriptor obtained from interest points is not very compact, and the computation time for obtaining interest points is very long.

The aim of the present invention is to remedy the drawbacks of the prior art, by providing a method and device for calculating image descriptors which is efficient in terms of computational complexity, making it possible to obtain descriptors which are robust to a set of geometric manipulations of the image, in particular to large changes of scale obtained by digital subsampling.

To that end, the invention proposes a method of calculating a descriptor of a digital image, represented by a set of coefficients, characterized in that it comprises the steps of:

- performing a hierarchical division into blocks of the digital image, the hierarchical division being limited to a predetermined number of levels of depth, the number of blocks per level of depth being dependent on said level of depth;
- for each level of depth, calculating at least one characteristic value from the coefficients representing each block;
- forming a descriptor of said digital image from the characteristic values of each block at each level of depth.

The invention makes it possible to calculate digital image descriptors which are particularly robust to large changes of scale of an image on account of the limitation to a predetermined number of the number of levels of division, as a predetermined number of levels of depth is used whatever the size of the digital image. Moreover, the formation of a descriptor from characteristic values calculated from several levels of depth makes it possible to further improve the representativeness of the descriptor obtained from an image which has undergone a change of scale by digital subsampling.

The hierarchical division is limited to a maximum of three levels of depth, whatever the size of the initial image. This is particularly important since the robustness of the obtained final descriptor to large-factor changes of scale is thus improved. This is because the use of too great a number of levels of division would be detrimental inasmuch as, beyond three levels of depth, when the processed image has undergone a large change of scale, the blocks of the division become very small and consequently the characteristic values calculated from these blocks become non-significant.

According to a preferred characteristic, each block of the level of depth of index n is divided into four blocks of substantially equal size at the following level of depth of index n+1.

This type of division is simple to implement and makes it possible to obtain a regular paving in blocks at each level of depth, which contributes to robustness with regard to changes of scale of a digital image.

According to a preferred characteristic, a characteristic value of each block of the division is the average of the coefficients representing said block. Thus, calculation of the characteristic value is particularly fast, which makes it possible to considerably reduce the computational complexity when the method of the invention is applied for the indexing of a large-sized image database. Furthermore, in order to refine the characterization of the image by its descriptor, other characteristic values which are simple to calculate, such as the variance, can be included in the descriptor calculated according to the invention.

According to a first advantageous alternative of the invention, the descriptor formation step consists of grouping together characteristic values in a description vector. The descriptor thus obtained is both relatively accurate with respect to the spatial content of the image and robust to large changes of scale.

According to another advantageous version of the invention, the descriptor formation step comprises the steps of:

- symmetrizing the characteristic values so as to obtain new characteristic values which are invariant with respect to a predetermined set of geometric transformations;
- grouping together these new characteristic values as a description vector.

The descriptor thus obtained is not only robust to large changes of scale, but in addition is also robust to a set of geometric transformations, which comprises rotations through a multiple of 90 degrees, reflections in a vertical or horizontal axis and any transformation resulting from their composition. Thus, even if a rotation through 90 degrees has been applied to a digital image, for example, the corresponding source image can be found in a database without the inverse geometric transformation operation having to be performed. This is particularly advantageous for reducing the processing time and complexity when such geometric transformations are performed and searches are made in very large databases.

According to a preferred characteristic, for an image comprising several color components, a description vector is associated with each of the color components of the image.

According to another version of the invention, and alternatively to the preceding ones, the hierarchical division step is preceded by a step of symmetrization of the coefficients representing the image. Thus a descriptor is also obtained which is robust to both large changes of scale and the geometric transformations cited above.

According to another aspect, the invention proposes a method of calculating a similarity distance between a source digital image and a target image, the images each being associated with a descriptor in accordance with one of the embodiments of the invention, characterized in that the method comprises the calculation of a distance between the descriptor of the source image and the descriptor of the target image to which weighting factors have been allocated. The use of weighting factors specific to the descriptors makes it possible to increase the indexing efficiency and the representativeness of the similarity distance after a possible distortion of the indexed image.

According to a preferred characteristic, the weighting factors are adjusted according to the type of color component, the level of depth in the division, and/or the number of spatial occurrences of each characteristic value. Thus, the weighting factors are adapted for each embodiment of the descriptor calculation proposed.

According to another advantageous alternative of the invention, and alternatively to the preceding one, the method of calculating a similarity distance between a source digital image and a target image, the images each being associated with a descriptor, each of the descriptors being defined by a calculation method according to the first embodiment of the invention, is characterized in that it comprises the steps of:

- applying a permutation to the descriptor of the source image according to at least one geometric transformation amongst a predetermined set of transformations in order to obtain a second descriptor associated with the source image;
- for each geometric transformation, calculating a weighted distance between the second descriptor of the source image and the descriptor of the target image to which weighting factors have been allocated;
- selecting the minimum distance amongst the calculated distances.

This calculation method makes it possible to obtain in the end a similarity distance between a source image and a target image which is invariant with respect to any geometric transformation of the group of transformations mentioned above, from a descriptor which is robust to large changes of scale only. Such a similarity distance calculation method is advantageous, inasmuch as it involves only permutations on the coefficients of the description vector, instead of performing each of the envisaged transformations on the whole of the image. Thus, the similarity distance which is invariant to large changes of scale and the geometric transformations is obtained in a manner which is not very complex, and represents an accurate description of the content of the images.

Correlatively, the invention concerns a device for calculating a descriptor of a digital image represented by a set of coefficients, characterized in that it comprises:

- means for hierarchical division of the digital image into blocks which is limited to a predetermined number of levels of depth, the number of blocks per level of depth being dependent on said level of depth;
- for each level of depth, means for calculating at least one characteristic value from the coefficients representing each block;
- means for forming a descriptor of said digital image from the characteristic values of each block of each level of depth,

    wherein the hierarchical division means is adapted to limit the number of levels of depth to three, whatever the size of the initial image.

The device for calculating a digital image descriptor according to the invention comprises means for implementing the characteristics described previously. This device has advantages analogous to those of the method of calculating a digital image descriptor in accordance with the invention.

The invention also concerns a device for calculating a similarity distance between a source image and a target image, comprising means adapted to implement the characteristics of the method of calculating a similarity distance between a source image and a target image described previously, and which has advantages analogous to said method.

The invention also concerns a digital signal processing apparatus including the device according to the invention or means for implementing the method according to the invention. This digital apparatus is for example a database management system, a digital photographic apparatus, a digital camera, a scanner or medical imaging equipment. The advantages of the device and the digital signal processing apparatus are identical to those described previously.

The invention also concerns a computer which comprises means adapted to implement the calculation method in accordance with the invention.

A computer program which can be read by a microprocessor comprises portions of software code adapted to implement the calculation method in accordance with the invention, when it is loaded in and executed by the microprocessor.

An information storage means, possibly totally or partially removable, which can be read by a computer system, comprises instructions for a computer program adapted to implement the calculation method in accordance with the invention when this program is loaded in and executed by the computer system.

The characteristics and advantages of the present invention will emerge more clearly from a reading of the various embodiments illustrated by the accompanying drawings, in which:

- Figure 1 depicts a device for searching by similarity for an image in an image database comprising the descriptor calculation device in accordance with the invention;
- Figure 2 depicts the result of the hierarchical division into blocks on three levels according to the invention;
- Figure 3 depicts one embodiment of the method of calculating characteristic values according to the invention;
- Figure 4 describes schematically the calculation of a descriptor which is robust to changes of scale according to a preferred embodiment of the invention;
- Figure 5 describes schematically the calculation of a descriptor which is also robust to a set of transformations on the image according to a first embodiment of the invention;
- Figure 6 describes the formation of a descriptor which is invariant to a set of transformations on the image according to a second embodiment of the invention;
- Figure 7 describes an algorithm for symmetrization of the image according to the second embodiment of the invention;
- Figure 8 depicts one embodiment of the calculation of the distance between two descriptors according to the invention;
- Figure 9 depicts a variant of the calculation of the distance between two descriptors according to the invention;
- Figure 10 depicts one embodiment of a device implementing the invention.

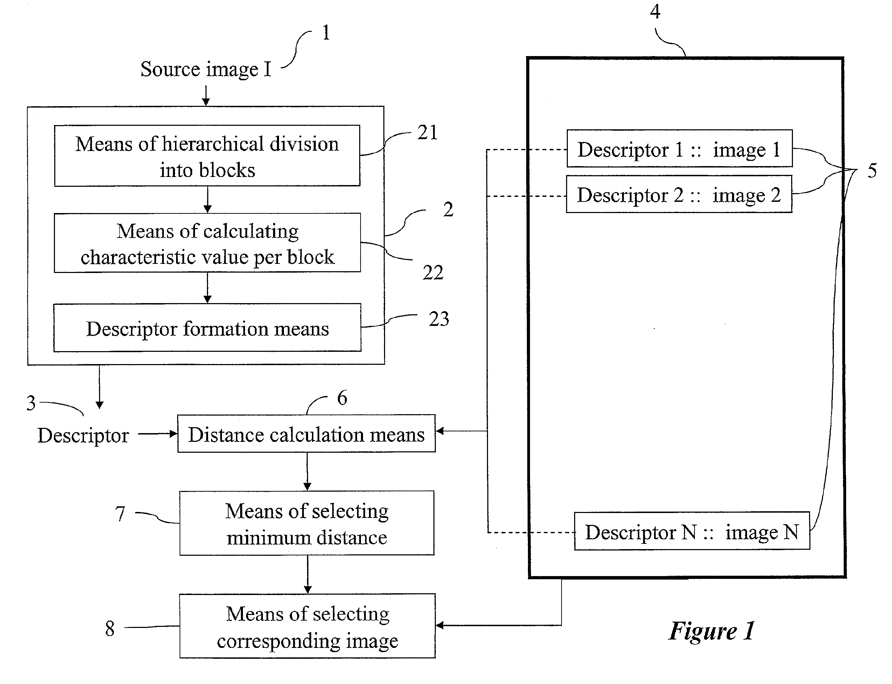

A description will be given first of all of a device for searching by similarity in an image database implementing the method of calculating descriptors of a digital image proposed in the invention, with reference to **Figure 1**.

In the example of Figure 1, it is sought to evaluate the similarity between a source image I (1) and a set of images stored in a database (4), containing a number N of images. The source image I may for example be one of the images contained in the database, having possibly undergone a distortion such as compression, a change of scale or a rotation. Each image consists of a series of digital samples, each sample representing one pixel of the image. For example, for an image with 256 levels of gray, each pixel is coded in one byte while, for a color image, each pixel can be coded in three bytes, each byte representing one chrominance component, for example red, green and blue.

With each image there is associated a descriptor (5) calculated according to the invention and also stored in the same database. The descriptors corresponding to the images in the database are stored prior to any search for similarity between a new image to be processed and the images in the database.

In order to evaluate the similarity between the source image I and the images in the database, the descriptor (3) associated with the source image I according to the invention is calculated. The distance between this descriptor and each descriptor (5) of each image in the database is calculated. From this set of distances, the minimum distance can be deduced and, according to the index of the descriptor corresponding to this minimum distance, the index of the image in the database which is most similar to the source image I can be deduced therefrom.

The device for application of the invention for the similarity search therefore comprises:

- means 2 for calculating a descriptor according to the invention;
- means 6 for calculating distances between two descriptors according to the invention;
- means 7 for selecting the minimum distance;
- means 8 for selecting an image from an image database.

In detail, in accordance with the invention, the device for calculating a descriptor (2) according to the invention comprises more precisely:

- means 21 for hierarchical division of a source image I into blocks;
- means 22 for calculating at least one characteristic value per block;
- means 23 for forming a descriptor from the characteristic values per block obtained by the calculation means 22.

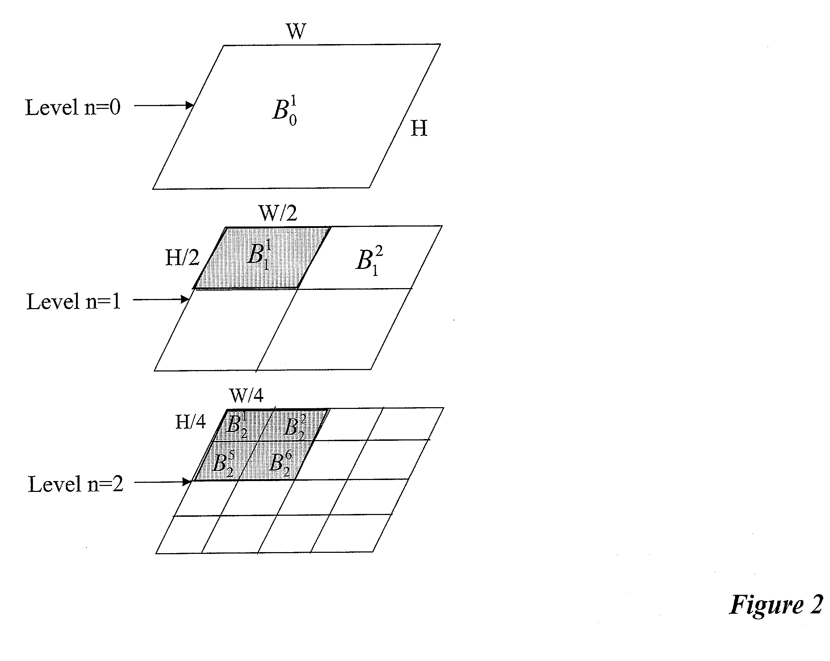

The hierarchical division means will be explained in detail with reference to Figure 2.

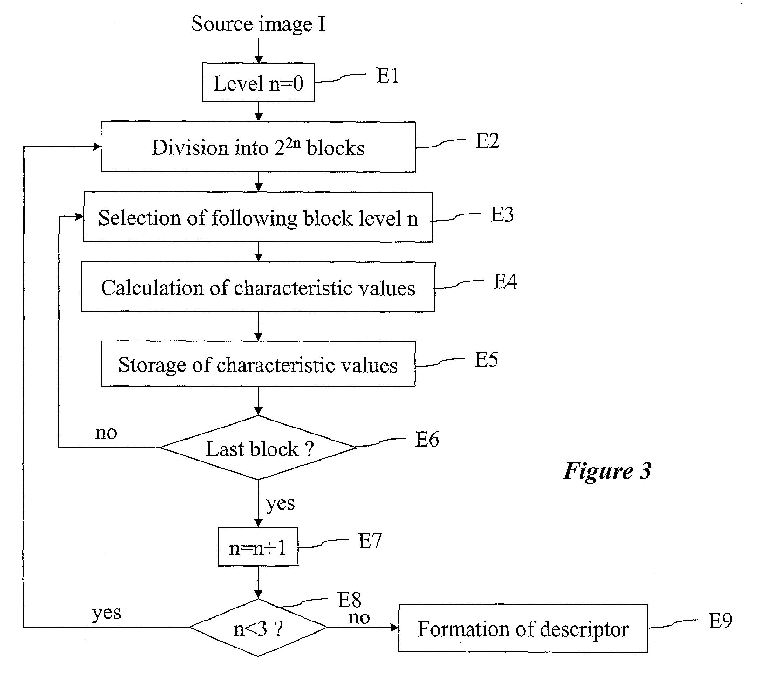

The algorithm implemented by the means 22 for calculating characteristic values for each block of the division will be explained in detail with reference to Figures 3, 4 and 6.

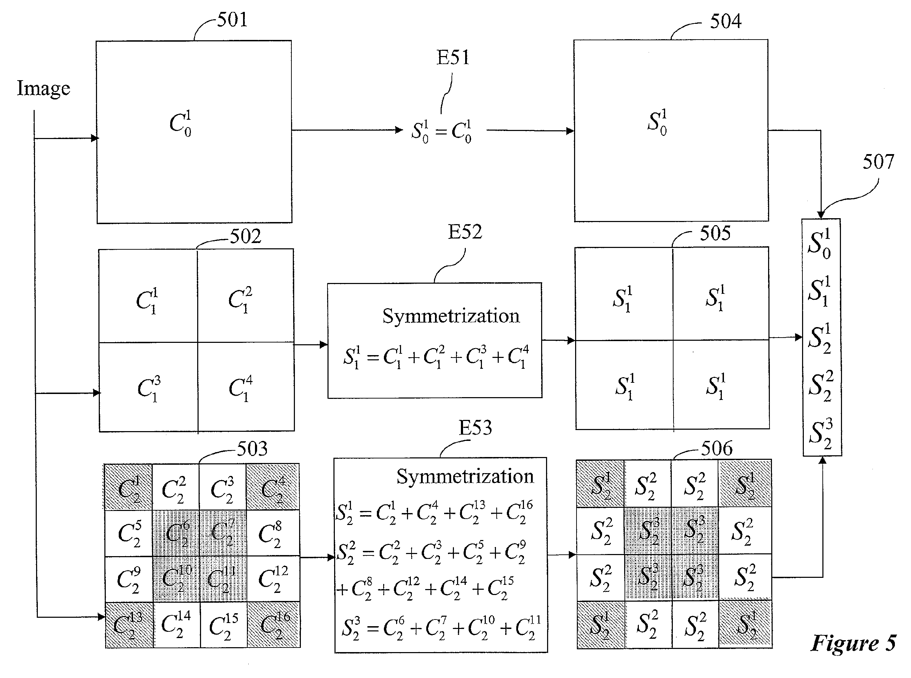

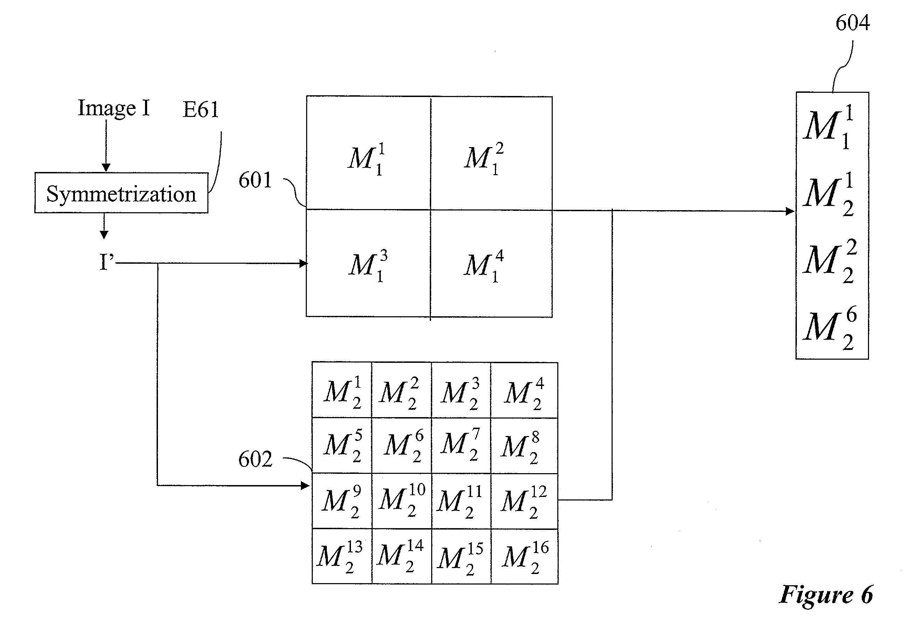

Finally, the algorithm implemented by the means for forming a descriptor from the characteristic values 23 will be described in detail, according to several embodiments, with reference to Figures 5 and 6.

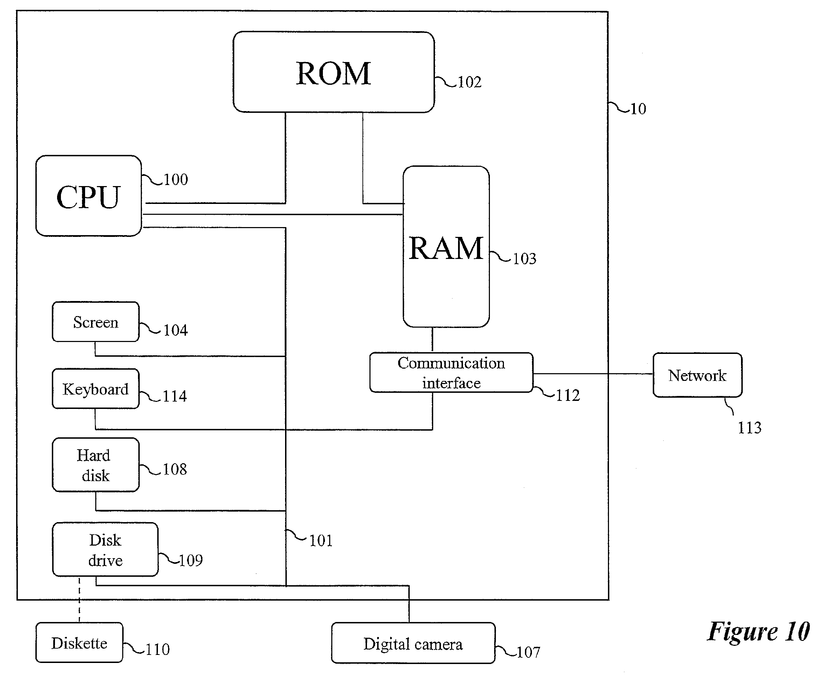

The device of Figure 1 is integrated in an apparatus, which is for example a computer, a database management system, a digital photographic apparatus or a digital camera. An example of a processing apparatus implementing the invention will be described in Figure 10. According to one embodiment of the invention, the device implementation means are incorporated in:

- a microprocessor;

- a read only memory containing a program for dividing an image into blocks, calculating characteristic values and indexing the data;
- a random access memory containing registers adapted to record variables modified during the execution of said programs.

Preferably, the hierarchical division into blocks is a division into blocks of similar size, and is performed on a restricted number of levels of division. An example of hierarchical division is described with reference to **Figure 2**, which illustrates three levels of division, such that at the level n the image is divided into $2^{2n}$ blocks of substantially equal size. The first level of division is level 0, for which the whole image is considered. At the following level, level 1, the image is divided into 4 blocks of substantially equal size: if the initial image is of size H x W, then each block of the division will be of size H/2 x W/2. If one of the dimensions H or W is odd, for example the dimension H, then two blocks of the division will have a height of E[H/2], where the operator E[ ] designates the smaller integer part, and the other two will have a height of E[H/2]+1.

At level 2, the image is divided into 16 blocks of substantially equal size. In practice, the change is made from a level of division n to the following level of division n+1 by dividing each block of level n into 4 blocks of substantially equal size, as illustrated in Figure 2, where the block of level 1, $B_1^1$, is divided at level 2 into $\{B_2^1, B_2^2, B_2^5, B_2^6\}$.

**Figure 3** describes, by means of a block diagram, a method of calculating a descriptor, in accordance with the invention, which is robust to a set of geometric manipulations of the image, and in particular to large changes of scale.

The method is implemented in the form of an algorithm which can be stored wholly or partially in an information storage means capable of cooperating with a microprocessor. This storage means can be read by a computer or a microprocessor. This storage means is or is not integrated with the device as described in Figure 10, and can be removable. For example, it can comprise a magnetic tape, a diskette or a CD-ROM.

In this embodiment, the first step E1 consists of initializing a counter n to 0, this counter representing the level of hierarchical division.

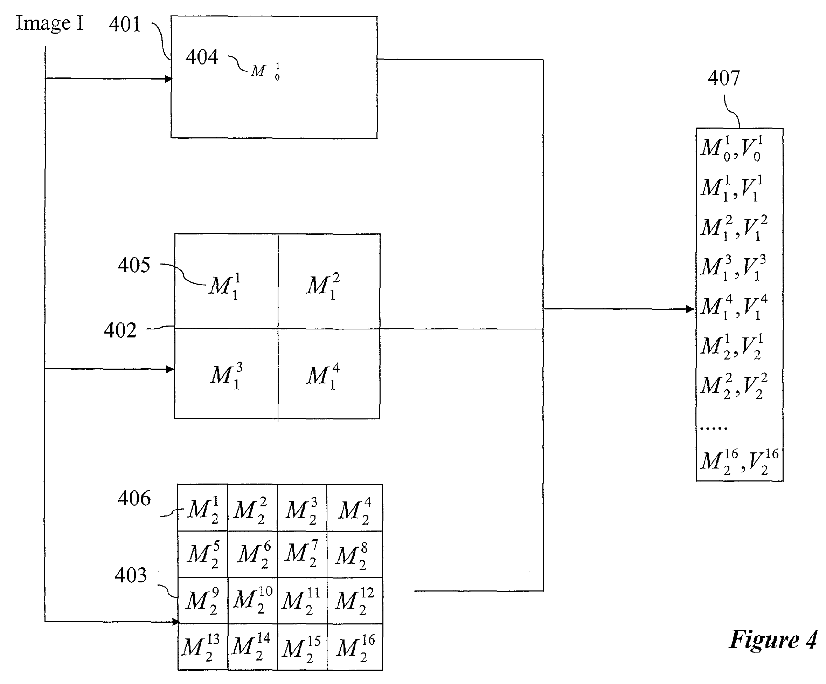

The following step E2 consists of dividing the image into $2^{2n}$ blocks, according to the procedure explained above with reference to Figure 2. Next, at the step E3, a block belonging to the current level of hierarchical division n is selected, starting with the first block. The direction of travel through the blocks of a given level of hierarchical division can for example be defined as the video scanning direction, starting from the top left-hand corner, and making one scan per line in order to arrive at the bottom right-hand corner. The numbering corresponding to this scanning direction is explained in Figure 4.

For the selected block, one or more characteristic values representing coefficients of the image signal of the selected block are calculated at the step E4. In this embodiment, on the one hand the average $M_n^i$ and on the other hand the variance $V_n^i$ of the image signal on this block are calculated. The index n represents the level of the hierarchical division and the index i represents the rank of the block in the level n of hierarchical division, according to the predefined order of travel through the blocks.

The following step E5 consists of storing all the characteristic values thus calculated for each block.

Next, at the step E6, it is checked whether the previously processed block is the last block of the level of division under consideration. If it is not the last block of the level of division under consideration, the steps E4 and E5 are repeated on the following block of level n according to the predetermined scanning order.

If, during the test step E6, it is determined that it is the last block of the level of division n, the process goes to the step E7 where the counter n is incremented by one.

Next, at the step E8, it is checked whether the level n is strictly less than 3. If such is the case, the process returns to the step E2, where the division into blocks of the level n is performed. As described with reference to the previous figure, the division is performed by division into 4 blocks of substantially equal size of each block of the previous level of division. Limitation of the depth of the hierarchical division is very important for providing robustness to large changes of scale. This is because it is very important to perform the calculation of the characteristic values on data which are significant with respect to the content of the image signal. If for example an additional level of division is permitted, the initial image is divided into 64 blocks at the level n=3. If an initial image undergoes a very great change of scale (for example, if each dimension of the image is divided by 8), it is highly probable that each block of the level n=3 will contain only very few pixels, and therefore the characteristic values, for example the average values, calculated from these blocks will be erroneous.

If, at the step E8, it is determined that the permitted maximum number of levels of division has been reached, the process goes to the step E9 where a descriptor is formed from the characteristic values stored at the step E5. In order to obtain a descriptor which is robust to large scaling factors, it is sufficient to concatenate all the stored characteristic values as a vector, as illustrated in Figure 4.

**Figure 4** illustrates the result of the method of calculating a descriptor, described with reference to Figure 3, which is robust to large scaling factors only. The three levels of hierarchical division of the source image are thus illustrated at 401 for the first level, 402 for the second level and 403 for the third level. The figure also illustrates the characteristic value $M_n^i$ associated with the i$^{th}$ block of the level of index n for each block of the division. For example the characteristic value calculated with respect to the whole image at level 0 is denoted by 404. The reference 405 represents the characteristic value calculated for a block of level 1, and 406 represents the characteristic value for a block of level 2. Finally, the descriptor 407 is formed in this example by concatenation of the 21 average values and/ or the 21 variances calculated for each block at each level of the division. The concatenation step corresponds to the step E9 of the algorithm of Figure 3. It should be noted that, for the description of the image, use can be made of either the set of average values only, or the set of variances only, or the two values simultaneously. Other characteristics of the image signal calculated per block of coefficients could also be used.

Figure 4 illustrates the result of the method of calculating a descriptor for a single color component of an image. For a color image, the descriptor calculation method illustrated in Figure 4 is applied for each color component. Consequently, for a color image represented for example in the YUV domain, a chrominance representation format well known to persons skilled in the art and used in particular in compression standards such as JPEG or MPEG-2, the final descriptor is formed by a set of three descriptors (407), each characterizing one of the components.

There will now be described with reference to **Figure 5** the generalization of the descriptor formation step E9, so as to make this descriptor robust not only to large changes of scale, but also to a set of geometric transformations: rotations through a multiple of 90 degrees (i.e. 90, 180 and 270 degrees), reflections in horizontal or vertical axes, and transformations resulting from the composition of aforementioned transformations.

In order to obtain this robustness property, the descriptor formation step comprises a step of symmetrization of the characteristic values calculated at each level of division, followed by a step of concatenation of the values obtained. The descriptor is then formed from values obtained after symmetrization. Figure 5 shows again the three levels of division (501, 502, 503) and the associated characteristic values calculated per block, denoted $C_n^i$. In a manner analogous to Figure 4, $C_n^i$ can be the average of the signal of the i$^{th}$ block of level n, or its variance for example.

After calculation of the characteristic values, symmetrization (E51, E52, E53) is performed, illustrated in Figure 5 for each level of resolution. The object of this step is to associate with each block of each level of division a value which is invariant for all the geometric transformations under consideration.

At the level of index n=0, symmetrization (E51) consists of copying the characteristic value associated with the single block under consideration. There is thus obtained a corresponding value after symmetrization $S_0^1 = C_0^1$, which is allocated to the block representing the image at this level of division (504).

At the following level of index n=1, symmetrization (E52) is applied to the four characteristic values, and a single value $S_1^1 = C_1^1 + C_1^2 + C_1^3 + C_1^4$ is obtained. In this example the sum of the characteristic values of the blocks under consideration is taken. This obtained value $S_1^1$ is associated with each of the blocks of the division as the characteristic value of the block (505). It is easy to show that in this way the description is invariant if any one of the transformations of the group under consideration is applied to the image 1.

For the level of index n=2, there are 16 characteristic values. For this level of division, symmetrization (E53) consists of calculating 3 values $(S_2^1, S_2^2, S_2^3)$ from the set of characteristic values, each value corresponding to the sum of the characteristic values associated with the blocks which are interchanged spatially when one of the transformations of the group of transformations under consideration is applied to the image. The three sets of blocks concerned are depicted graphically in Figure 5. These values are then associated with the blocks, as illustrated in the figure (506). As for the previous level of division, the description thus obtained is invariant if any one of the transformations of the group under consideration is applied to the image I.

Finally, the descriptor (507) is formed by concatenation of the characteristic values obtained by symmetrization $(S_0^1, S_1^1, S_2^1 S_2^2 S_2^3)$. As previously, if an image comprising several color components is processed, a description vector is calculated for each of these components.

On account of this symmetry, this descriptor is robust to more geometric distortions than the one proposed by Figure 4. This is because it is intrinsically robust to multiple rotations through 90 degrees and/or to a reflection of the image about a vertical axis. On the other hand, on account of its smaller size, it is less discriminating than the descriptor proposed in Figure 4: a greater number of different images could generate the same descriptor.

The choice of one or other of these two descriptors therefore depends on the intended application. It is however important to note that these two descriptors have a very good robustness to large changes of scale.

In a preferred embodiment of the invention, the characteristic value calculated for a block of coefficients is the average value per block. It should be noted that, in this case, the values obtained by symmetrization for the first two levels are linked by the formula: $S_1^1 = 4S_0^1$. In this case, the value $S_1^1$ can be omitted from the final descriptor, which makes it possible to have a descriptor of still smaller size, and therefore make the subsequent difference calculations faster.

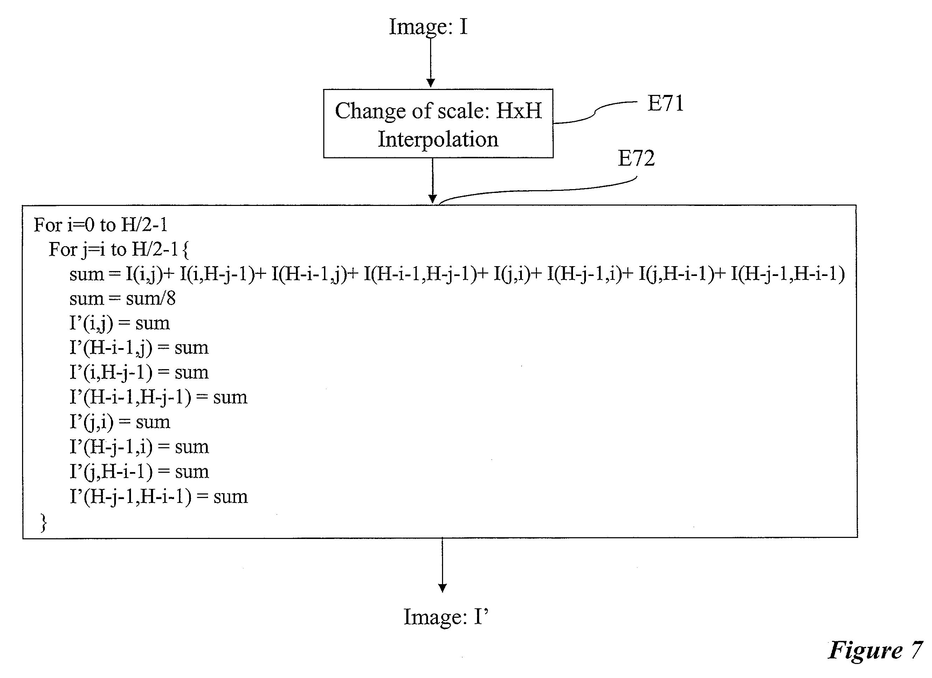

There will now be described the method of calculating a descriptor which is robust to both large changes of scale and to the geometric transformations under consideration according to a second embodiment in accordance with the invention with reference to Figures 6 and 7.

**Figure 6** illustrates the overall descriptor calculation method according to this second embodiment of the invention. There is an initial image I on which it is sought to calculate the descriptor. For reasons of clarity only the calculation for a single color component is depicted. The first step E61 of this embodiment is an image symmetrization step, prior to calculation of the characteristic values. This symmetrization step is detailed in Figure 7.

The method is implemented in the form of an algorithm which can be stored wholly or partially in an information storage means capable of cooperating with a microprocessor. This storage means can be read by a computer or a microprocessor. This storage means is or is not integrated with the device as described in Figure 10, and can be removable. For example, it can comprise a magnetic tape, a diskette or a CD-ROM.

**Figure 7** describes in detail the step E61 of symmetrization of the pixels of the initial image I. The first step of the symmetrization algorithm E71 consists of applying a change of scale to the image in order to make it square, with dimensions H x H. The change of scale is applied by interpolation, a technique well known to persons skilled in the art. H will be chosen independently of the size values of the initial image. In the preferred embodiment, a value of H equal to 512 is chosen.

The following step E72 consists of replacing all the pixels of the image in each color component by values which are calculated so as to be invariant to all the geometric transformations under consideration.

The symmetrization algorithm described in the figure is based on calculation of the average of the groups of pixels of the image which are permuted spatially when one of the envisaged geometric transformations is applied. The value of each pixel is then replaced by the average value thus calculated. The result is an image which comprises a number of identical values, placed symmetrically on the spatial representation framework. This algorithm is a generalization to a matrix of size H x H of the symmetrization algorithm implemented previously and explained with reference to Figure 5.

Let I denote the image signal, which is fully described by $\{I(i,j), 0 \le i,j < H\}$. The coefficients of the first quadrant of the image are traversed in two dimensions, for i varying from 0 to H/2-1 and for j also varying from 0 to H/2-1. For each spatial position (i,j) considered, a calculation is made of the average value, denoted sum in the figure, of the 8 pixels liable to be permuted spatially by one of the envisaged geometric transformations: $\{I(i,j), I(i, H-1-j), I(H-1-i,j), I(H-1-i,H-1-j), I(j,i), I(H-1-j,i), I(j,H-1-i), I(H-1-j,H-1-i)\}$. Next, this value is allocated to each of the pixels taken into account. At the end of the step E72 an image matrix I' is obtained which is symmetrical, and whose first quadrant is also symmetrical.

Next, hierarchical division of the image I' and calculation of the averages of the blocks of the division are applied. The result of these steps is illustrated at 601, 602 in Figure 6. Because of the prior symmetrization step, many average values are identical since a number of blocks contain identical sets of coefficients, permuted spatially. This is because the 4 blocks obtained at the level of division of index n=1 contain the same set of coefficients. In a preferred embodiment, calculation of the average values can be limited to the blocks containing different coefficients only, that is to say the first block of the division at the level n=1 (block denoted $B_1^1$ in Figure 2) and the blocks coming from this block at the following level (blocks denoted respectively $B_2^1, B_2^2, B_2^5, B_2^6$ in Figure 2). Moreover, at the level n=2, because of the symmetry of the block representing the first quadrant of the image, the values $M_2^2$ and $M_2^5$ are also identical. As shown in Figure 6, only 4 characteristic values representing non-identical average values are adopted finally for forming a descriptor (604) by concatenation: $\{M_1^1, M_2^1, M_2^2, M_2^6\}$.

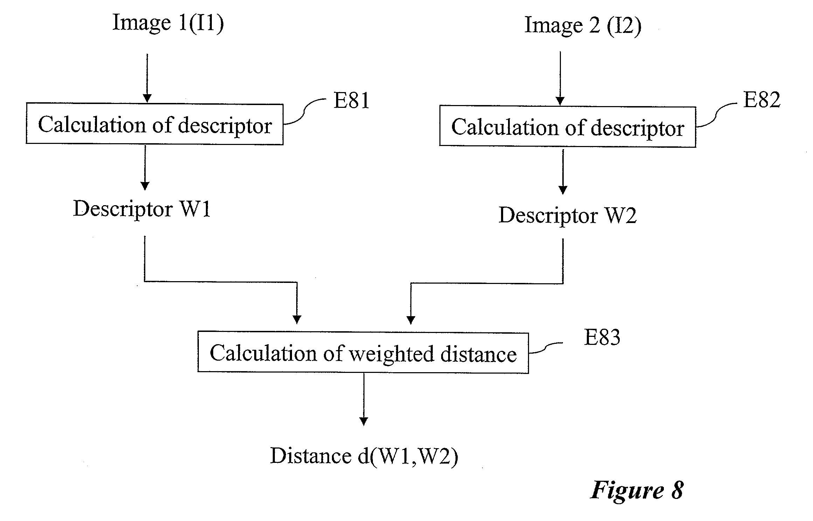

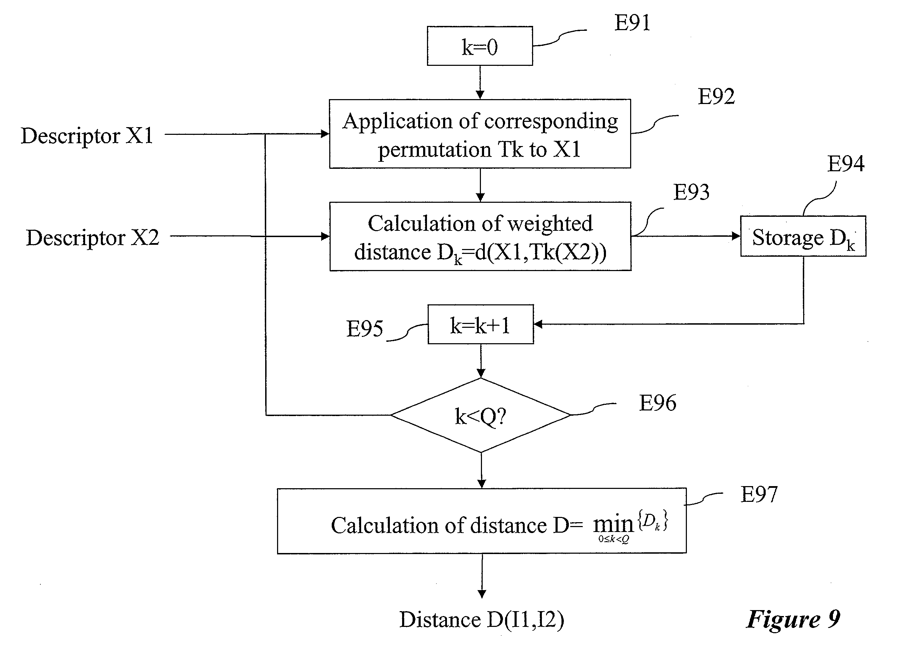

There will now be described, with reference to Figures 8 and 9, two embodiments of the calculation of the distance between two images by means of one of the descriptors obtained according to the calculation method in accordance with the invention.

**Figure 8** describes the calculation of the distance between two descriptors according to a preferred embodiment of the invention.

The method described by Figure 8 is implemented in the form of an algorithm which can be stored wholly or partially in an information storage means capable of cooperating with a microprocessor. This storage means can be read by a computer or a microprocessor. This storage means is or is not integrated with the device as described in Figure 10, and can be removable. For example, it can comprise a magnetic tape, a diskette or a CD-ROM.

Two images denoted I1 and I2 are taken into consideration. For each image, an access is made, at the step E81 for the image I1 (respectively E82 for the image I2), to the associated descriptor (W1, W2), each descriptor being calculated according to one of the embodiments described with reference to Figures 4, 5 or 6. These descriptors may have been calculated previously and stored in a database associated with the image. Alternatively, if these descriptors are not stored in memory, their calculation is performed according to the algorithm chosen at the step E81 (respectively E82).

In order to take into account the most general case, color images will be considered in this embodiment, said images comprising three color components denoted Y, U and V. As explained previously, in the case of color images, the final description vector is formed by concatenation of the description vectors for each color component. For example, for the image Ip (with p=1 or p=2), let $(Sp_0^1, Sp_1^1, ..., Sp_1^{k1}, Sp_2^1 ..., Sp_2^{k2})$ denote the descriptor corresponding to the color component Y, $(SUp_0^1, SUp_1^1, SUp_1^{k1}, SUp_2^1 ..., SUp_2^{k2})$ denote the descriptor corresponding to the component U and $(SVp_0^1, SVp_1^1, ..., SVp_1^{k1}, SVp_2^1 ..., SVp_2^{k2})$ denote the descriptor corresponding to the component V. The index k1 (respectively k2) indicates the number of characteristic values for the level of division of index n=1 (respectively n=2), and varies according to the method used. Finally, the overall descriptor of the image Ip is formed from all these values: $W_p = (Sp_0^1, ....., SVp_2^{k2})$, and its size varies according to the embodiment of the descriptor calculation chosen.

The following step E83 consists of calculating a weighted distance between the descriptors of the two images I1 and I2:

$$d(W1, W2) = \alpha_0 (S1_0^1 - S2_0^1)^2 + \sum_{i=1}^{k1} \alpha_1^i (S1_1^i - S2_1^i)^2 + \sum_{j=1}^{k2} \alpha_2^j (S1_2^j - S2_2^j)^2$$

$$+ \beta_0 (SU1_0^1 - SU2_0^1)^2 + \sum_{i=1}^{k1} \beta_1^i (SU1_1^i - SU2_1^i)^2 + \sum_{j=1}^{k2} \beta_2^j (SU1_2^j - SU2_2^j)^2$$

$$+ \gamma_0 (SV1_0^1 - SV2_0^1)^2 + \sum_{i=1}^{k1} \gamma_1^i (SV1_1^i - SV2_1^i)^2 + \sum_{j=1}^{k2} \gamma_2^j (SV1_2^j - SV2_2^j)^2$$

According to the preferred embodiment of the invention, equal weightings are chosen for the color components U and V, and therefore $\beta = \gamma$ for all the characteristic values. Moreover, as in the color representation space YUV the component Y is more discriminating with regard to the content of the image than the other components, all the weighting coefficients are preferably chosen so as to have, for each characteristic value at each level of the division, $\alpha = 2\beta$.

With reference to each of the embodiments of the descriptor calculation, in a preferred embodiment the following values are chosen.

For the first embodiment, described with reference to Figure 4, where a descriptor invariant to large changes of scale only is provided, formed of 21 characteristic values per color component, the following values are chosen:

$$\alpha_0 = 4;$$
$$\alpha_1^i = 2, \quad 1 \le i \le 4 \qquad (\text{Eq } 1)$$
$$\alpha_2^j = 1, \quad 1 \le j \le 16$$

For the general case of a descriptor invariant to the geometric manipulations with 5 characteristic values per color component, described with reference to Figure 5, the following are preferably chosen:

$$\alpha_0 = 4;$$

$$\alpha_1^1 = 4,$$

$$\alpha_2^1 = 2, \; \alpha_2^2 = 4, \; \alpha_2^3 = 2$$

It should be noted that, in this case, the weightings at the level of division of index n=2 are preferably chosen in proportion to the number of average block values taken into account by each of the corresponding characteristic values. For the case of a descriptor calculated from average values only by symmetrization of the average values calculated per block, as described with reference to Figure 5 for the particular case of characteristic values which are averages per block, the description vector of each color component is formed of 4 characteristic values only, the first two levels giving correlated values. In this case, the following weighting values are proposed:

$$\alpha_0 = 4;$$

$$\alpha_1^1 = 0,$$

$$\alpha_2^1 = 2, \; \alpha_2^2 = 4, \; \alpha_2^3 = 2$$

For the case of a descriptor calculated from average values only, by prior symmetrization of the image, as described with reference to Figures 6 and 7, the description vector of each color component is formed from 4 characteristic values only, the first two levels giving equal values. In this case, the following weighting values are proposed:

$$\alpha_0 = 0;$$

$$\alpha_1^1 = 4,$$

$$\alpha_2^1 = 2, \; \alpha_2^2 = 4, \; \alpha_2^3 = 2$$

When the description vector used in the calculation of the weighted distance has been calculated according to one of the procedures providing a descriptor invariant to the geometric transformations, the distance between two images (I1, I2) has one and the same value if either one of the images has undergone a change of scale or one of the geometric manipulations under consideration. It may, however, be noted that the descriptors invariant to the geometric manipulations are small in size and are probably less accurate and discriminating than the initial descriptor, robust to changes of scale, described with reference to Figure 4. This descriptor is robust to large-factor changes of scale, and it is preferable to use it if only robustness to changes of scale is desired.

In an alternative embodiment, a similarity measurement tolerant to the geometric manipulations under consideration can be obtained from this complete descriptor. This embodiment is described with reference to Figure 9.

**Figure 9** starts with two descriptors, X1 and X2, corresponding respectively to two images I1 and I2, and which were calculated previously according to the first embodiment described in Figure 4. These descriptors have 21 coefficients per color component when a single characteristic value per block of the division is taken into account. In order to simplify the explanation, black and white images with a single color component will be considered in this example. In this case, the notation $X1 = (S1_0^1, \; S1_1^1, ..., S1_1^4; \; S1_2^1 ..., S1_2^{16})$ can be used.

The first step E91 is the initialization of a counter k to 0. This counter represents the index of one of the geometric manipulations for which the robustness of the description is sought. As previously, the geometric manipulations taken into account are for example rotations through an angle which is a multiple of 90 degrees, and in this case the set of geometric manipulations under consideration is denoted {T0, T1, T2, T3}, where T0 is identity, T1 a rotation through 90 degrees, T2 a rotation through 180 degrees and T3 a rotation through 270 degrees.

The second step E92 consists of applying a permutation to the description vector X1 corresponding to the resulting description vector if the transformation Tk is applied to the image I1. In fact the geometric manipulation under consideration could be applied to I1 and then the corresponding descriptor recalculated. However this is not necessary, since the result of this operation is equivalent to permuting the characteristic values of the description vector. For example, for T1, i.e. rotation through 90 degrees, the descriptor corresponding to the image I1 after rotation is:

$$T1(X1) = (S1_0^1, S1_1^3, S1_1^1, S1_1^4, S1_1^2, S1_2^{13}, S1_2^9, S1_2^5, S1_2^1, S1_2^{14}, ..., S1_2^4).$$

After this permutation, which is limited to identity for the index k=0, a calculation is made of the weighted distance, according to the preferred weighting mode described previously (equation Eq1), between the permuted description vector X1 and the description vector X2, as shown in Figure 9 at the step E93. This distance, denoted $D_k$, is then stored at the subsequent step E94.

Next the value of the counter k is incremented by 1 at the step E95, and at the step E96 it is checked that the value of k has not reached the cardinal Q of the set of geometric manipulations taken into account. In this example, when the set of rotations by a right angle is considered, the cardinal Q is equal to 4.

In the case where k is less than Q, the steps E92 to E95 are repeated. In the contrary case, the step E96 is followed by the step E97, at which the minimum value amongst all the previously stored distance values $D_k$ is determined. This minimum value, denoted D(l1,l2), is adopted for representing the similarity between the images 11 and 12 apart from a geometric manipulation. This embodiment makes it possible to obtain a more accurate description of the similarity of the images, at the expense of a higher computational cost.

The method described in Figure 9 is implemented in the form of an algorithm which can be stored wholly or partially in an information storage means capable of cooperating with a microprocessor. This storage means can be read by a computer or a microprocessor. This storage means is or is not integrated with the device as described in Figure 10, and can be removable. For example, it can comprise a magnetic tape, a diskette or a CD-ROM.

According to the embodiment chosen and depicted in Figure 10, a device implementing the invention is for example a microcomputer 10 connected to various peripherals, for example a digital camera 107 (or a scanner or any image acquisition or storage means) connected to a graphics card and supplying information to be processed according to the invention.

The device 10 comprises a communication interface 112 connected to a network 113 able to transmit digital data to be processed or conversely to transmit data processed by the device. The device 10 also comprises a storage means 108 such as for example a hard disk. It also comprises a drive 109 for a disk 110. This disk 110 can be a diskette, a CD-ROM or a DVD-ROM, for example. The disk 110, like the disk 108, can contain data processed according to the invention, and the program or programs implementing the invention, which, once read by the device 10, will be stored on the hard disk 108. According to one variant, the program enabling the device to implement the invention can be stored in read only memory 102 (called ROM in the diagram). In a second variant, the program can be received in order to be stored in a manner identical to that described previously by means of the communication network 113.

This same device possesses a screen 104 making it possible to display the data to be processed or to serve as an interface with the user who can thus parameterize certain processing modes, using a keyboard 114 or any other means (a mouse for example).

The central unit 100 (called CPU in the diagram) executes the instructions relating to implementation of the invention, instructions stored in the read only memory 102 or in the other storage elements. At power-up, the processing programs stored in a non-volatile memory, for example the ROM 102, are transferred into the random access memory RAM 103 which will then contain the executable code of the invention as well as registers for storing the variables necessary for implementing the invention.

More generally, an information storage means, which can be read by a computer or a microprocessor, integrated or not with the device, and possibly removable, stores a program implementing the method according to the invention.

The communication bus 101 allows communication between the various elements included in the microcomputer 10 or connected thereto. The representation of the bus 101 is not limiting and in particular the central unit 100 is able to communicate instructions to any element of the microcomputer 10 directly or by means of another element of the microcomputer 10.

Of course, the present invention is in no way limited to the embodiments described and depicted, but on the contrary includes any variant within the capability of persons skilled in the art.

**Claims**

**1.** A method of calculating a descriptor of a digital image (I), represented by a set of coefficients, wherein the method comprises the steps of:

- performing a hierarchical division (E2) into blocks of the digital image, the hierarchical division being limited to a predetermined number of levels of depth, the number of blocks per level of depth being dependent on said level of depth;
- for each level of depth, calculating (E4) at least one characteristic value from the coefficients representing each block;
- forming (E9) a descriptor of said digital image (I) from the characteristic values of each block at each level of depth,

wherein the hierarchical division (E2) is limited to a maximum of three levels of depth, whatever the size of the initial image.

2. A method of calculating a descriptor according to Claim 1, wherein each block of the level of depth of index n is divided into four blocks of substantially equal size at the following level of depth of index n+1.

3. A method of calculating a descriptor according to Claim 1 or 2, wherein a characteristic value of each block of the division is the average of the coefficients representing said block.

4. A method of calculating a descriptor according to one of Claims 1 to 3, wherein a characteristic value of each block of the division is the variance of the coefficients representing said block.

5. A method of calculating a descriptor according to one of Claims 1 to 4, wherein the descriptor formation step (E9) consists of grouping together characteristic values in a description vector.

6. A method of calculating a descriptor according to one of Claims 1 to 4, wherein the descriptor formation step (E9) comprises the steps of:

- symmetrization (E51, E52, E53) of the characteristic values so as to obtain new characteristic values which are invariant with respect to a predetermined set of geometric transformations;
- grouping together of these new characteristic values as a description vector.

7. A method of calculating a descriptor according to Claim 5 or 6, wherein a description vector is associated with each of the color components of the image.

8. A method of calculating a descriptor according to one of Claims 1 to 5, wherein the hierarchical division step (E2) is preceded by a step (E61) of symmetrization of the coefficients representing the image (I).

9. A method of calculating a similarity distance between a source digital image (I1) and a target image (I2), the images each being associated with a descriptor (W1, W2), each of the descriptors being defined by a calculation method according to one of Claims 1 to 8, comprising the calculation of a distance between the descriptor of the source image and the descriptor of the target image to which weighting factors have been allocated.

10. A method of calculating a similarity distance between a source digital image (I1) and a target image (I2), the images each being associated with a descriptor (X1, X2), each of the descriptors being defined by a calculation method according to Claim 5, comprising the steps of:

- applying a permutation to the descriptor (X1) of the source image according to at least one geometric transformation (Tk) amongst a predetermined set of transformations in order to obtain a second descriptor (Tk(X1)) associated with the source image;
- for each geometric transformation, calculating a weighted distance ($D_k$) between the second descriptor of the source image (Tk(X1)) and the descriptor (X2) of the target image to which weighting factors have been allocated;
- selecting (E97) the minimum distance (D) amongst the calculated distances.

11. A method of calculating a similarity distance according to Claim 9 or 10, wherein the weighting factors are adjusted according to the type of color component, the level of depth in the division, and/or the number of spatial occurrences of each characteristic value.

12. A calculation method according to Claim 6 or 10, wherein the predetermined set of geometric transformations comprises rotations through a multiple of 90 degrees, reflections in a vertical or horizontal axis and any transformation resulting from their composition.

13. A device for calculating a descriptor of a digital image (I), represented by a set of coefficients, comprising:

   - means (21) for hierarchical division into blocks of the digital image, the hierarchical division being limited to a predetermined number of levels of depth, the number of blocks per level of depth being dependent on said level of depth;
   - for each level of depth, means (22) for calculating at least one characteristic value from the coefficients representing each block;
   - means (23) for forming a descriptor of said digital image (I) from the characteristic values of each block of each level of depth,

   wherein the hierarchical division means (21) is adapted to limit the number of levels of depth to three, whatever the size of the initial image.

14. A descriptor calculation device according to Claim 13, wherein the hierarchical division means (21) is adapted to divide each block at the level of depth of index n into four blocks of substantially equal size at the following level of depth of index n+1.

15. A descriptor calculation device according to Claim 13 or 14, wherein the calculation means (22) is adapted to calculate the average of the coefficients of each block of the division.

16. A descriptor calculation device according to one of Claims 13 to 15, wherein the calculation means (22) is adapted to calculate the variance of the coefficients of each block of the division.

17. A descriptor calculation device according to one of Claims 13 to 16, wherein the descriptor formation means (23) is adapted to group together characteristic values as a description vector.

18. A descriptor calculation device according to one of Claims 13 to 16, wherein the descriptor formation means (23) comprises:

   - means for symmetrization of the characteristic values so as to obtain new characteristic values which are invariant with respect to a predetermined set of geometric transformations;
   - means for grouping together these new characteristic values as a description vector.

19. A descriptor calculation device according to one of Claims 17 or 18, wherein the device is adapted to associate a description vector with each of the color components of the image.

20. A descriptor calculation device according to one of Claims 13 to 17, wherein the device also comprises means for symmetrizing (E61) the coefficients representing the image (I).

21. A device for calculating a similarity distance between a source digital image (I1) and a target image (I2), each being associated with a descriptor (W1, W2), each of the descriptors being calculated using a device according to one of Claims 13 to 20, comprising means for calculating a distance between the descriptor of the source image and the descriptor of the target image to which weighting factors have been allocated.

22. A device for calculating a similarity distance between a source digital image (11) and a target image (12), each being associated with a descriptor (X1, X2), each of the descriptors being calculated using a device according to Claim 17, comprising:

   - means adapted to apply a permutation to the descriptor (X1) of the source image according to at least one geometric transformation (Tk) amongst a predetermined set of transformations in order to obtain a second descriptor (Tk(X1)) associated with the source image;
   - for each geometric transformation, means for calculating a weighted distance ($D_k$) between the second descriptor of the source image (Tk(X1)) and the descriptor (X2) of the target image to which weighting factors have been allocated;
   - means for selecting (E97) the minimum distance (D) amongst the calculated distances.

**23.** A device for calculating a similarity distance according to Claim 21 or 22, wherein the weighting factors are adjusted according to the type of color component, the level of depth in the division and/or the number of spatial occurrences of each characteristic value.

**24.** A calculation device according to Claim 18 or 22, wherein the predetermined set of geometric transformations comprises rotations through a multiple of 90 degrees, reflections in a vertical or horizontal axis and any transformation resulting from their composition.

**25.** A descriptor calculation device according to any one of Claims 13 to 20, wherein the division means (21), the characteristic value calculation means (22) and the description formation means (23) are incorporated in:

- a microprocessor (100),
- a read only memory (102) containing a program for processing the data, and
- a random access memory (103) containing registers adapted to record modified variables of said program.

**26.** A device for calculating a similarity distance according to any one of Claims 21 to 24, wherein the distance calculation means and the permutation means are incorporated in:

- a microprocessor (100),
- a read only memory (102) containing a program for processing the data, and
- a random access memory (103) containing registers adapted to record modified variables of said program.

**27.** A digital signal processing apparatus, **characterized in that** it comprises means adapted to implement the calculation method according to any one of Claims 1 to 12.

**28.** A digital signal processing apparatus, **characterized in that** it comprises the device according to any one of Claims 13 to 26.

**29.** A computer, **characterized in that** it comprises means adapted to implement the calculation method according to one of Claims 1 to 12.

**30.** A computer program which can be read by a microprocessor, **characterized in that** it comprises portions of software code adapted to implement the calculation method according to one of Claims 1 to 12, when it is loaded in and executed by the microprocessor.

**31.** An information storage means, possibly totally or partially removable, which can be read by a computer system, **characterized in that** it comprises instructions for a computer program adapted to implement the calculation method according to one of Claims 1 to 12 when this program is loaded in and executed by the computer system.

EP 1 467 292 A1

Source image I — 1

┌─────────────────────────────────────────┐
│  ┌───────────────────────────────┐       │
│  │  Means of hierarchical division│ — 21  │
│  │        into blocks            │       │
│  └───────────────────────────────┘       │
│                                          │ — 2
│  ┌───────────────────────────────┐       │
│  │   Means of calculating        │       │
│  │  characteristic value per block│ — 22  │
│  └───────────────────────────────┘       │
│                                          │
│  ┌───────────────────────────────┐       │
│  │  Descriptor formation means   │ — 23  │
│  └───────────────────────────────┘       │
└─────────────────────────────────────────┘

┌─────────────────────────────────────────────┐ — 4
│                                               │
│   ┌────────────────────────────────┐          │
│   │  Descriptor 1 ::  image 1      │          │
│   └────────────────────────────────┘          │ — 5
│   ┌────────────────────────────────┐          │
│   │  Descriptor 2 ::  image 2      │          │
│   └────────────────────────────────┘          │
│                                               │
│                                               │
│   ┌────────────────────────────────┐          │
│   │  Descriptor N ::  image N      │          │
│   └────────────────────────────────┘          │
└─────────────────────────────────────────────┘

3 —

Descriptor ⟶ ┌──────────────────────────────┐ — 6
             │  Distance calculation means  │
             └──────────────────────────────┘

7 — ┌──────────────────────────────┐
    │   Means of selecting          │
    │    minimum distance           │
    └──────────────────────────────┘

8 — ┌──────────────────────────────┐
    │   Means of selecting          │
    │   corresponding image         │
    └──────────────────────────────┘

*Figure 1*

Level n=0

$W$

$B_0^1$

$H$

Level n=1

$W/2$

$H/2$

$B_1^1$

$B_1^2$

Level n=2

$W/4$

$H/4$

$B_2^1$

$B_2^2$

$B_2^5$

$B_2^6$

*Figure 2*

EP 1 467 292 A1

Source image I

Level n=0 — E1

Division into $2^{2n}$ blocks — E2

Selection of following block level n — E3

Calculation of characteristic values — E4

Storage of characteristic values — E5

no ← Last block ? — E6

yes

n=n+1 — E7

E8
yes ← n<3 ? no → Formation of descriptor — E9

*Figure 3*

EP 1 467 292 A1

Image I  401

$M_0^1$  404

405  $M_1^1$  $M_1^2$

402

$M_1^3$  $M_1^4$

407

$M_0^1, V_0^1$

$M_1^1, V_1^1$

$M_1^2, V_1^2$

$M_1^3, V_1^3$

$M_1^4, V_1^4$

$M_2^1, V_2^1$

$M_2^2, V_2^2$

.....

$M_2^{16}, V_2^{16}$

406  

| $M_2^1$ | $M_2^2$ | $M_2^3$ | $M_2^4$ |
|---|---|---|---|
| $M_2^5$ | $M_2^6$ | $M_2^7$ | $M_2^8$ |
| $M_2^9$ | $M_2^{10}$ | $M_2^{11}$ | $M_2^{12}$ |
| $M_2^{13}$ | $M_2^{14}$ | $M_2^{15}$ | $M_2^{16}$ |

403

*Figure 4*

EP 1 467 292 A1

Image

501

$C_0^1$

E51

$S_0^1 = C_0^1$

504

$S_0^1$

507

502

$C_1^1$ | $C_1^2$
$C_1^3$ | $C_1^4$

E52

Symmetrization

$S_1^1 = C_1^1 + C_1^2 + C_1^3 + C_1^4$

505

$S_1^1$ | $S_1^1$
$S_1^1$ | $S_1^1$

$S_0^1$
$S_1^1$
$S_2^1$
$S_2^2$
$S_2^3$

503

$C_2^1$ | $C_2^2$ | $C_2^3$ | $C_2^4$
$C_2^5$ | $C_2^6$ | $C_2^7$ | $C_2^8$
$C_2^9$ | $C_2^{10}$ | $C_2^{11}$ | $C_2^{12}$
$C_2^{13}$ | $C_2^{14}$ | $C_2^{15}$ | $C_2^{16}$

E53

Symmetrization

$S_2^1 = C_2^1 + C_2^4 + C_2^{13} + C_2^{16}$

$S_2^2 = C_2^2 + C_2^3 + C_2^5 + C_2^9$
$\quad + C_2^8 + C_2^{12} + C_2^{14} + C_2^{15}$

$S_2^3 = C_2^6 + C_2^7 + C_2^{10} + C_2^{11}$

506

$S_2^1$ | $S_2^2$ | $S_2^2$ | $S_2^1$
$S_2^2$ | $S_2^3$ | $S_2^3$ | $S_2^2$
$S_2^2$ | $S_2^3$ | $S_2^3$ | $S_2^2$
$S_2^1$ | $S_2^2$ | $S_2^2$ | $S_2^1$

*Figure 5*

EP 1 467 292 A1

Image I    E61

Symmetrization

I'

601

$$M_1^1 \qquad M_1^2$$

$$M_1^3 \qquad M_1^4$$

602

| $M_2^1$ | $M_2^2$ | $M_2^3$ | $M_2^4$ |
|---|---|---|---|
| $M_2^5$ | $M_2^6$ | $M_2^7$ | $M_2^8$ |
| $M_2^9$ | $M_2^{10}$ | $M_2^{11}$ | $M_2^{12}$ |
| $M_2^{13}$ | $M_2^{14}$ | $M_2^{15}$ | $M_2^{16}$ |

604

$$M_1^1$$
$$M_2^1$$
$$M_2^2$$
$$M_2^6$$

EP 1 467 292 A1

*Figure 6*

Image: I

Change of scale: HxH
Interpolation ⟍ E71

E72

```
For i=0 to H/2-1
   For j=i to H/2-1{
      sum = I(i,j)+ I(i,H-j-1)+ I(H-i-1,j)+ I(H-i-1,H-j-1)+ I(j,i)+ I(H-j-1,i)+ I(j,H-i-1)+ I(H-j-1,H-i-1)
      sum = sum/8
      I'(i,j) = sum
      I'(H-i-1,j) = sum
      I'(i,H-j-1) = sum
      I'(H-i-1,H-j-1) = sum
      I'(j,i) = sum
      I'(H-j-1,i) = sum
      I'(j,H-i-1) = sum
      I'(H-j-1,H-i-1) = sum
   }
```

Image: I'

*Figure 7*

EP 1 467 292 A1

Image 1(I1)                                    Image 2 (I2)

┌─────────────────────────┐  ⌐ E81      ┌─────────────────────────┐  ⌐ E82
│ Calculation of descriptor │             │ Calculation of descriptor │
└─────────────────────────┘             └─────────────────────────┘

Descriptor W1                                  Descriptor W2

                    ┌─────────────────────────────────┐  ⌐ E83
                    │ Calculation of weighted distance  │
                    └─────────────────────────────────┘

                              Distance d(W1,W2)

                                        *Figure 8*

EP 1 467 292 A1

E91

```
k=0
```

Descriptor X1 ────────────►

E92

```
Application of corresponding
permutation Tk to X1
```

Descriptor X2 ────────────►

E93                    E94

```
Calculation of weighted
distance D_k=d(X1,Tk(X2))
```
────►
```
Storage D_k
```

E95 ─── ```k=k+1``` ◄────────────

E96

```
k<Q?
```

E97

$$\text{Calculation of distance } D= \min_{0\leq k<Q}\{D_k\}$$

Distance D(I1,I2)

*Figure 9*

Figure 10

EP 1 467 292 A1

**European Patent Office**

## EUROPEAN SEARCH REPORT

Application Number

EP 04 29 0940

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CLIMER S ET AL: "Image database indexing using JPEG coefficients" PATTERN RECOGNITION, PERGAMON PRESS INC. ELMSFORD, NY, US, vol. 35, no. 11, November 2002 (2002-11), pages 2479-2488, XP004373331 ISSN: 0031-3203 * page 2481, right-hand column, paragraph 2 - paragraph 3 * * page 2482, right-hand column, line 11 - line 17 * * figures 2,3 * * sections 4.1,4.2; figure 4 * * section 5 * | 1-31 | G06F17/30 |
| A | TAN T ET AL: "Object recognition based on fractal neighbor distance" SIGNAL PROCESSING, AMSTERDAM, NL, vol. 81, no. 10, October 2001 (2001-10), pages 2105-2129, XP004303699 ISSN: 0165-1684 * page 2115, left-hand column, line 8 - line 23 * | 1,9,10, 13,21, 22,27-31 | |
| A | OHM J-R ET AL: "A set of visual feature descriptors and their combination in a low-level description scheme" SIGNAL PROCESSING. IMAGE COMMUNICATION, ELSEVIER SCIENCE PUBLISHERS, AMSTERDAM, NL, vol. 16, no. 1-2, September 2000 (2000-09), pages 157-179, XP004216274 ISSN: 0923-5965 * page 165, left-hand column, paragraph 1; figure 7 * | 1,9,10, 13,21, 22,27-31 | TECHNICAL FIELDS SEARCHED (Int.Cl.7) G06F |

-/--

The present search report has been drawn up for all claims

| Place of search | Date of completion of the search | Examiner |
|---|---|---|
| Berlin | 19 July 2004 | Polzer, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

25

## EUROPEAN SEARCH REPORT

European Patent Office

Application Number

EP 04 29 0940

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CHEN P-M: "A quadtree normalization scheme based on cyclic translations" PATTERN RECOGNITION, PERGAMON PRESS INC. ELMSFORD, N.Y, US, vol. 30, no. 12, 1 December 1997 (1997-12-01), pages 2053-2064, XP004101081 ISSN: 0031-3203 * the whole document * | 1,9,10, 13,21, 22,27-31 | |

TECHNICAL FIELDS SEARCHED (Int.Cl.7)

The present search report has been drawn up for all claims

| Place of search | Date of completion of the search | Examiner |
|---|---|---|
| Berlin | 19 July 2004 | Polzer, A |